# EUROPÄISCHE PATENTSCHRIFT

(11) **EP 3 418 985 B1**
(45) Veröffentlichungstag und Bekanntmachung des Hinweises auf die Patenterteilung: **19.05.2021**
(21) Anmeldenummer: 18177552.9
(22) Anmeldetag: 13.06.2018
(51) Int. Cl.: G07C 9/00, E05B 19/00

(54) **VORRICHTUNG ZUR BETÄTIGUNG EINES FUNKSCHLÜSSELS EINES KRAFTFAHRZEUG**
DEVICE FOR ACTUATING A REMOTE CONTROL KEY OF A MOTOR VEHICLE
DISPOSITIF DE FONCTIONNEMENT D'UN CLEF À TÉLÉCOMMANDE RADIOFRÉQUENCE POUR UN VÉHICULE À MOTEUR

(30) Priorität: 19.06.2017 DE 102017113422
(43) Veröffentlichungstag der Anmeldung: 26.12.2018
(73) Patentinhaber: Witte Automotive GmbH, 42551 Velbert (DE)
(72) Erfinder: Jan, Kucera, 33442 Chlumcany (CZ); Vojtech, Cibulka, 32300 Plzen (CZ)
(74) Vertreter: Manitz Finsterwald Patent- und Rechtsanwaltspartnerschaft mbB

(56) Entgegenhaltungen:
- WO-A1-2015/107006
- WO-A1-2016/201355
- DE-A1-102012 015 925
- US-A1- 2009 309 696

## Beschreibung

Die vorliegende Erfindung betrifft eine Vorrichtung zum Betätigen eines Funkschlüssels eines Kraftfahrzeugs, mit einer zwischen einer Geschlossen-Stellung und einer Offen-Stellung um eine Schwenkachse verschwenkbaren Signalgeberaufnahme zur Aufnahme des Funkschlüssels.

Eine derartige Vorrichtung ist grundsätzlich bekannt und kommt beispielsweise bei der gemeinsamen Nutzung eines Kraftfahrzeugs durch mehrere Benutzer zur Anwendung (sog. Carsharing). Vorrichtungen zum Austausch eines Schlüssels zwischen mehreren Benutzern sind zum Beispiel aus der WO 2016/201355 A1, US 2009/0309696 A1, DE 10 2012 015 925 A1, WO 2015/107006 A1 bekannt. Hierbei ermöglicht die Vorrichtung einem berechtigten Benutzer mit Hilfe eines virtuellen Schlüssels, zum Beispiel eines Mobiltelefons oder eines drahtlosen Kommunikationsmittels (z.B. RFID-Transponder), Zugang zu dem Kraftfahrzeug zu erlangen, ohne dass der Benutzer im tatsächlichen Besitz eines zum Ver- oder Entriegeln eines Türschlosses des Kraftfahrzeugs benötigten Signalgebers, wie zum Beispiel eines vom Hersteller zusammen mit dem Kraftfahrzeug bereitgestellten Funkschlüssels, ist. Zu diesem Zweck wird der Signalgeber üblicherweise in einer Signalgeberaufnahme der Vorrichtung im Inneren des Kraftfahrzeugs verwahrt, wobei ein Betätigungsmittel der Vorrichtung auf der Grundlage eines vom virtuellen Schlüssel generierten Signals den in der Signalgeberaufname aufgenommenen Signalgeber derart betätigt, dass durch ein Entriegelungssignal des Signalgebers das Türschloss des Kraftfahrzeugs entriegelt wird, woraufhin der Benutzer Zugang zum Kraftfahrzeug erhält.

Neben dieser Funktion wird der Signalgeber meist auch zum Entriegeln einer Wegfahrsperre und/oder zum Anlassen eines Motors des Kraftfahrzeugs verwendet, wozu normalerweise eine mechanische und/oder elektrische Verbindung zwischen dem Signalgeber und einem Zündschloss hergestellt werden muss. Zu diesem Zweck ist es erforderlich, die Signalgeberaufnahme aus ihrer Geschlossen-Stellung in die Offen-Stellung zu verschwenken, so dass der Signalgeber aus der Signalgeberaufnahme entnommen werden kann. Hierbei kann es von einem Benutzer als angenehm empfunden werden, wenn eine Verschwenkbewegung, insbesondere eine Aufschwenkbewegung, der Signalgeberaufnahme unterstützt wird.

Eine Aufgabe der Erfindung ist es daher, eine Vorrichtung der vorstehend genannten Art mit einer komfortabler bedienbaren Signalgeberaufnahme zu schaffen.

Die Aufgabe wird durch eine Vorrichtung mit den Merkmalen des Anspruchs 1 gelöst.

Der Erfindung liegt der allgemeine Gedanke zugrunde, den Öffnungsvorgang, d.h. die Aufschwenkbewegung, der Signalgeberaufnahme durch ein Federelement zu unterstützen, welches die Signalgeberaufnahme derart mit einer Federkraft beaufschlagt, dass die Signalgeberaufnahme dazu neigt, gewissermaßen selbsttätig aus der Geschlossen-Stellung in die Offen-Stellung aufzuschwenken. Dies bietet den Vorteil, dass bei der Aufschwenkbewegung der Signalgeberaufnahme ein von dieser aufgenommener Signalgeber einem Benutzer des Kraftfahrzeugs entgegenschwenkt, so dass dieser den Signalgeber nach Erreichen der Offen-Stellung der Signalgeberaufnahme nur noch zu entnehmen braucht, um beispielsweise eine Wegfahrsperre zu entriegeln und/oder einen Motor des Kraftfahrzeugs zu starten. Letztendlich wird durch ein derart automatisches Aufschwenken der Signalgeberaufnahme ein erhöhter Benutzerkomfort erreicht.

Während ihres Öffnungsvorgangs vollführt die Signalgeberaufnahme in einer Aufschwenkrichtung eine Aufschwenkbewegung aus der Geschlossen-Stellung in die Offen-Stellung. Dahingegen wird die Signalgeberaufnahme bei einem Schließvorgang in einer Einschwenkrichtung aus der Offen-Stellung in die Geschlossen-Stellung verschwenkt bzw. eingeschwenkt. Mit anderen Worten sind die Aufschwenkrichtung und die Einschwenkrichtung zueinander entgegengesetzt.

Vorteilhafte Ausbildungen der Erfindung sind den Unteransprüchen, der Beschreibung und den Zeichnungen zu entnehmen.

Bevorzugt ist das Federelement eine Schenkelfeder mit mindestens einer um eine Windungsachse gewundenen Windung, wobei die Windungsachse und die Schwenkachse zumindest annähernd koaxial ausgerichtet sind. Dabei kann sich ein Schenkel der Schenkelfeder an der Signalgeberaufnahme und der andere Schenkel der Schenkelfeder an einem Gegenlager abstützen, welches beispielsweise an einem Gehäuse der Vorrichtung vorgesehen sein kann.

Das Federelement kann aber auch eine Schraubenfeder sein, welche einerseits an der Signalgeberaufnahme und andererseits an dem Gehäuse angebracht sein kann. Insbesondere kann die Schraubenfeder eine in der Geschlossen-Stellung der Signalgeberaufnahme komprimierte Schraubendruckfeder sein kann, welche sich bei einem Aufschwenkvorgang entspannt und dabei die Signalgeberaufnahme in die Offen-Stellung aufschwenkt. Es ist aber auch denkbar, dass die Schraubenfeder eine in der Geschlossen-Stellung ausgelenkte Schraubenzugfeder ist, welche bei einem Aufschwenkvorgang durch Kontraktion die Signalgeberaufnahme in die Offen-Stellung aufschwenkt.

Durch das Federelement erfährt die Signalgeberaufnahme bei einem Aufschwenkvorgang eine Beschleunigung. Damit ein Verschwenkvorgang, insbesondere ein Aufschwenkvorgang, der Signalgeberaufnahme aber möglichst gleichmäßig und sanft abläuft, kann ein Bremsmittel zum Abbremsen einer Schwenkbewegung der Signalgeberaufnahme vorgesehen sein.

Vorzugsweise ist die Signalgeberaufnahme an einem die Schwenkachse definierenden Lagerfortsatz verschwenkbar gelagert, insbesondere welcher an einem Gehäuseabschnitt des Gehäuses der Vorrichtung ausgebildet ist. Dabei kann eine an der Signalgeberaufnahme ausgebildete Fortsatzaufnahme den Lagerfortsatz zur Lagerung der Signalgeberaufnahme aufnehmen. Bei einer derartigen Ausgestaltung der Vorrichtung ist es von Vorteil, wenn das Bremsmittel zwischen dem Lagerfortsatz und der Fortsatzaufnahme der Signalgeberaufnahme angeordnet ist. Hierfür kann das Bremsmittel zweiteilig ausgebildet sein, wobei ein Teil des Bremsmittels an dem Lagerfortsatz und der andere Teil des Bremsmittels an der Fortsatzaufnahme drehfest angebracht sind. Um die nötige Bremswirkung zu erzielen, sind die beiden Teile des Bremsmittels derart beschaffen, dass die Reibung zwischen diesen erhöht ist, wenn die Teile des Bremsmittels bei einem Verschwenkvorgang der Signalgeberaufnahme gegeneinander bewegt werden. Dabei kann mindestens ein Teil ein Kunststoffmaterial umfassen, wobei zwischen die Teile zur Erhöhung der Reibung ein elastisches Material, z.B. Gummi oder Silikon, geschaltet sein kann. Das Bremsmittel kann aber auch ein hochviskoses Fluid umfassen, welches zwischen Lagerfortsatz und Fortsatzaufnahme eingebracht ist.

Da die Signalgeberaufnahme infolge der Federkraft des Federelements dazu neigt, selbsttätig aufzuschwenken, ist es vorteilhaft, wenn die Vorrichtung einen Sperrhaken aufweist, welcher in der Geschlossen-Stellung der Signalgeberaufnahme zusammen mit einem Gegenlager ein Aufschwenken der Signalgeberaufnahme in die Offen-Stellung verhindert. Dabei können der Sperrhaken und das Gegenlager in der Geschlossen-Stellung der Signalgeberaufnahme form- und/oder kraft- und/oder reibschlüssig in Eingriff stehen. Zum Aufschwenken der Signalgeberaufnahme lässt sich der Eingriff zwischen Sperrhaken und Gegenlager durch ein Verschwenken der Signalgeberaufnahme entgegen der Aufschwenkrichtung lösen. Hierfür ist der Sperrhaken vorteilhafterweise an der Signalgeberaufnahme um eine Drehachse drehbar gelagert, wodurch der Sperrhaken um die Drehachse im Wesentlichen frei bewegbar ist. Gemäß einer bevorzugten Ausgestaltung der Vorrichtung kann die Drehachse des Sperrhakens zumindest annähernd parallel zu der Schwenkachse der Signalgeberaufnahme ausgerichtet sein.

Damit der um die Drehachse frei bewegliche Sperrhaken, insbesondere beim Lösen des Eingriffs zwischen Sperrhaken und Gegenlager bzw. beim in Eingriff bringen von Sperrhaken und Gegenlager, geführt ist, kann eine Führungskulisse mit einem ersten Kulissenabschnitt zur Führung des Sperrhakens vorgesehen sein. Genauer gesagt kann der erste Kulissenabschnitt der Führungskulisse eine bezüglich der Schwenkachse der Signalgeberaufnahme radial innenliegende Führungsbahn und eine radial außenliegende Führungsbahn umfassen, welche jeweils dazu dienen, den Sperrhaken zu führen. Vorzugsweise ist das Gegenlager zwischen der radial innenliegenden Führungsbahn und der radial außenliegenden Führungsbahn angeordnet.

Zum Aufschwenken der Signalgeberaufnahme ist es erforderlich, dass der Sperrhaken nach dem Lösen des Eingriffs mit dem Gegenlager nicht erneut mit dem Gegenlager in Eingriff gelangen kann, weshalb an dem ersten Kulissenabschnitt der Führungskulisse ein Vorsprung ausgebildet ist, welcher bei einer Verschwenkung der Signalgeberaufnahme von der Geschlossen-Stellung in eine den Eingriff freigebende Stellung den Sperrhaken derart verdreht, dass der Sperrhaken bei einer anschließenden Aufschwenkbewegung der Signalgeberaufnahme an dem Gegenlager vorbeibewegbar ist. Bevorzugt läuft der Sperrhaken dann entlang der radial innenliegenden Führungsbahn auf.

Ebenso muss der Sperrhaken beim Einschwenken der Signalgeberaufnahme aus der Offen-Stellung in die Geschlossen-Stellung an dem Gegenlager vorbeibewegt werden. Zu diesem Zweck weist der erste Kulissenabschnitt der Führungskulisse vorzugsweise eine Rampe auf, welche bei der Einschwenkbewegung der Signalgeberaufnahme den Sperrhaken für einen erneuten Eingriff mit dem Gegenlager ausrichtet. Bevorzugt verdreht die Rampe den Sperrhaken in Richtung der radial außenliegenden Führungsbahn, so dass der Sperrhaken bei einer Einschwenkbewegung der Signalgeberaufnahme entlang der radial außenliegenden Führungsbahn aufläuft.

Läuft der Sperrhaken bei einem Aufschwenkvorgang der Signalgeberaufnahme entlang der radial innenliegenden Führungsbahn und bei einem Einschwenkvorgang der Signalgeberaufnahme entlang der radial außenliegenden Führungsbahn auf und befindet sich das Gegenlager radial zwischen den beiden Führungsbahnen, wird der Sperrhaken beim Aufschwenken und beim Einschwenken der Signalgeberaufnahme auf unterschiedlichen Seiten des Gegenlagers vorbeigeführt. Es versteht sich, dass der Sperrhaken bei entsprechender Ausgestaltung der Führungskulisse bei einem Aufschwenkvorgang auch entlang der radial außenliegenden Führungsbahn und bei einem Einschwenkvorgang entlang der radial innenliegenden Führungsbahn auflaufen kann.

Vorteilhafterweise weist die Führungskulisse ferner einen zweiten Kulissenabschnitt auf, welcher bei einer Verschwenkung der Signalgeberaufnahme zusammen mit einem an der Signalgeberaufnahme ausgebildeten Führungsbogen zur Führung der Signalgeberaufnahme dient. Gewissermaßen mündet der erste Kulissenabschnitt in dem zweiten Kulissenabschnitt bzw. der zweite Kulissenabschnitt mündet in dem ersten Kulissenabschnitt.

Innerhalb des zweiten Kulissenabschnitts kann sich der Sperrhaken zwischen der radial innenliegenden Führungsbahn und der radial außenliegenden Führungsbahn frei bewegen, d.h. der Sperrhaken ist in dem zweiten Kulissenabschnitt der Führungskulisse ungeführt.

Zur Begrenzung der Aufschwenkbewegung der Signalgeberaufnahme kann an dem Führungsbogen ein Fortsatz ausgebildet sein, welcher zusammen mit einem, insbesondere an einem Gehäuse der Vorrichtung ausgebildeten, Anschlag die Aufschwenkbewegung begrenzt. Gelangt der an dem Führungsbogen ausgebildete Fortsatz zur Anlage mit dem Anschlag, ist hierdurch die Offen-Stellung der Signalgeberaufnahme definiert. Vorteilhafterweise kann bzw. können der Fortsatz und/oder der Anschlag einen elastischen Puffer, zum Beispiel aus Gummi, aufweisen, so dass Fortsatz und Anschlag gedämpft, insbesondere geräuscharm, zur Anlage gelangen.

Die Vorrichtung kann ferner eine Kommunikationsschnittstelle umfassen, welche dazu dient, Signale eines virtuellen Schlüssels zu empfangen und/oder Signale an den virtuellen Schlüssel zu senden.

Zur zusätzlichen Sicherheit kann die Vorrichtung ein Verriegelungsmittel zur Verriegelung der Signalgeberaufnahme aufweisen, um eine Entnahme des Signalgebers durch eine unbefugte Person zu verhindern.

Üblicherweise umfasst ein Signalgeber einen ersten Taster, welcher bei Betätigung ein Entriegelungssignal zum Entriegeln eines Türschlosses eines Kraftfahrzeugs erzeugt, und einen zweiten Taster, welcher zur Verriegelung des Türschlosses mittels eines Verriegelungssignals dient.

Da sich die Signalgeber je nach Hersteller und/oder Modell des Kraftfahrzeugs in ihrer Form und Größe unterscheiden können, kann die Signalgeberaufnahme eine einsetzbare Schale umfassen, welche vorteilhafterweise eine Negativform des Signalgebers darstellt und welche eine eindeutige Ausrichtung des Signalgebers bezüglich eines Betätigungsmittels zur Betätigung des Signalgebers ermöglicht.

Für einen besonders kompakten und einfachen Aufbau der Vorrichtung können das Betätigungsmittel und das Verriegelungsmittel eine bauliche Einheit bilden, d.h. also fest miteinander verbunden sein. Dabei ist es unerheblich, ob das Betätigungsmittel und das Verriegelungsmittel einstückig miteinander ausgebildet sind oder ob das Betätigungsmittel und das Verriegelungsmittel aus gefügten Einzelteilen zusammengesetzt sind.

Um eine bauliche Einheit zu bilden, können das Betätigungsmittel und das Verriegelungsmittel beispielsweise an einer eine Längsmittelachse definierenden gemeinsamen Welle ausgebildet sein. Zur Bewegung der Welle kann ein Antrieb vorgesehen sein, dessen Antriebsachse zumindest annähernd rechtwinklig zur Längsmittelachse der Welle ausgerichtet ist.

Bevorzugt umfasst das Betätigungsmittel mindestens einen von der Welle radial nach außen ragenden Nocken. Dem oder jedem Nocken kann ein Übertragungsmittel in Form eines reversibel auslenkbaren, insbesondere zweiseitigen, Übertragungshebels zugeordnet sein, welcher durch den Nocken verschwenkt werden und dadurch einen zugeordneten Taster des Signalgebers betätigen kann.

Um die Signalgeberaufnahme zu verriegeln kann das Verriegelungsmittel in eine Aussparung der Signalgeberaufnahme eintauchen. Gemäß einer vorteilhaften Ausgestaltung erstreckt sich das Verriegelungsmittel zumindest annähernd rechtwinklig zu wenigstens einem der Nocken und insbesondere auf einer Seite der Ebene, welche durch die Längsmittelachse der Welle und die beiden von der Welle radial abstehenden Nocken aufgespannt wird. Mit anderen Worten ragt das Verriegelungsmittel auf einer Seite dieser Ebene von der Welle radial nach außen. Dabei kann das Verriegelungsmittel in Richtung quer zu der Längsmittelachse der Welle, insbesondere bedingt durch die halbseitige Erstreckung bezüglich der durch die Längsmittelachse der Welle sowie die Nocken verlaufenden Ebene, zumindest annähernd halbkreisförmig ausgebildet sein bzw. eine halbrunde Form aufweisen. Es versteht sich, dass das Verriegelungsmittel auch eine nicht runde Form, insbesondere eine polygonale Form, aufweisen kann.

Vorteilhaft ist, wenn eine aktuelle Stellung des Betätigungsmittels und des Verriegelungsmittels bekannt ist. Zu diesem Zweck kann die Vorrichtung einen Stellungssensor zur Detektion einer Stellung, insbesondere einer Drehstellung der Welle, aufweisen.

Nachfolgend wird die Erfindung rein beispielhaft anhand einer möglichen Ausführungsform unter Bezugnahme auf die beigefügten Zeichnungen beschrieben. Es zeigen:
- Fig. 1: eine Explosionsdarstellung einer erfindungsgemäßen Vorrichtung mit einer Signalgeberaufnahme;
- Fig. 2: eine perspektivische Ansicht eines Teils der Vorrichtung von Fig. 1 umfassend die Signalgeberaufnahme und einen Zwischenabschnitt eines Gehäuses;
- Fig. 3: eine Schnittansicht der Vorrichtung von Fig. 1 in einer Geschlossen-Stellung der Signalgeberaufnahme;
- Fig. 4: eine Schnittansicht der Vorrichtung von Fig. 1 in einer Stellung der Signalgeberaufnahme, in welcher ein Sperrhaken und ein Gegenlager voneinander gelöst sind;
- Fig. 5: eine Schnittansicht der Vorrichtung von Fig. 1 in einer ersten Zwischen-Stellung der Signalgeberaufnahme;
- Fig. 6: eine Schnittansicht der Vorrichtung von Fig. 1 in einer OffenStellung der Signalgeberaufnahme;
- Fig. 7: eine Schnittansicht der Vorrichtung von Fig. 1 in einer zweiten Zwischen-Stellung der Signalgeberaufnahme;
- Fig. 8: eine Schnittansicht der Vorrichtung von Fig. 1 in einer Stellung der Signalgeberaufnahme zur Ausrichtung des Sperrhakens;
- Fig. 9: eine Schnittansicht der Vorrichtung von Fig. 1 in einer Stellung der Signalgeberaufnahme kurz vor einem erneuten Eingriff von Sperrhaken und Gegenlager; und
- Fig. 10: eine Schnittansicht der Vorrichtung von Fig. 1 in der Geschlossen-Stellung der Signalgeberaufnahme.

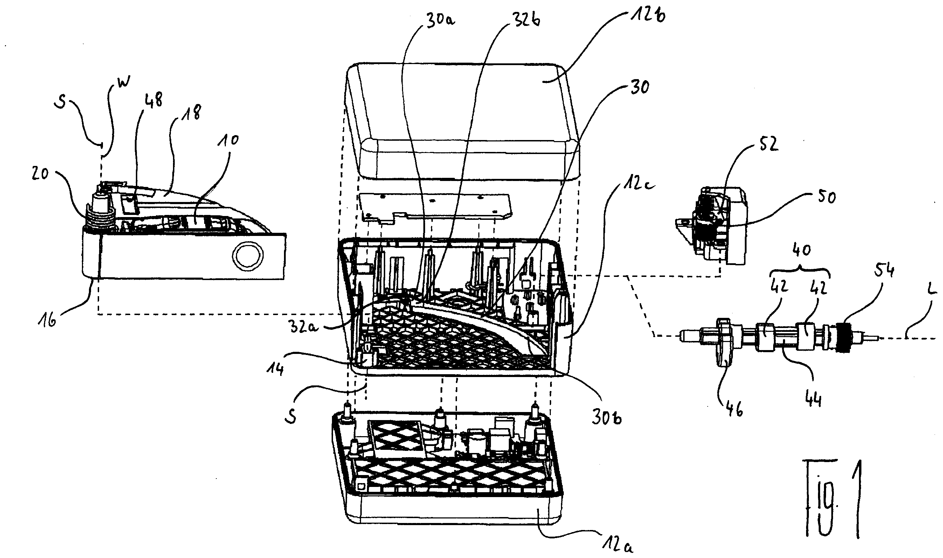

Die Figuren zeigen eine Vorrichtung zum Betätigen eines Signalgebers 10, welcher in Fig. 1 in Form eines Funkschlüssels, beispielsweise eines Kraftfahrzeugs, erkennbar ist. Wie anhand von Fig. 1 zu erkennen ist, weist die Vorrichtung ein Gehäuse auf, welches eine Gehäusebasis 12a und einen Gehäusedeckel 12b umfasst, wobei zwischen der Gehäusebasis 12a und dem Gehäusedeckel 12b ein Gehäusezwischenabschnitt 12c angeordnet ist.

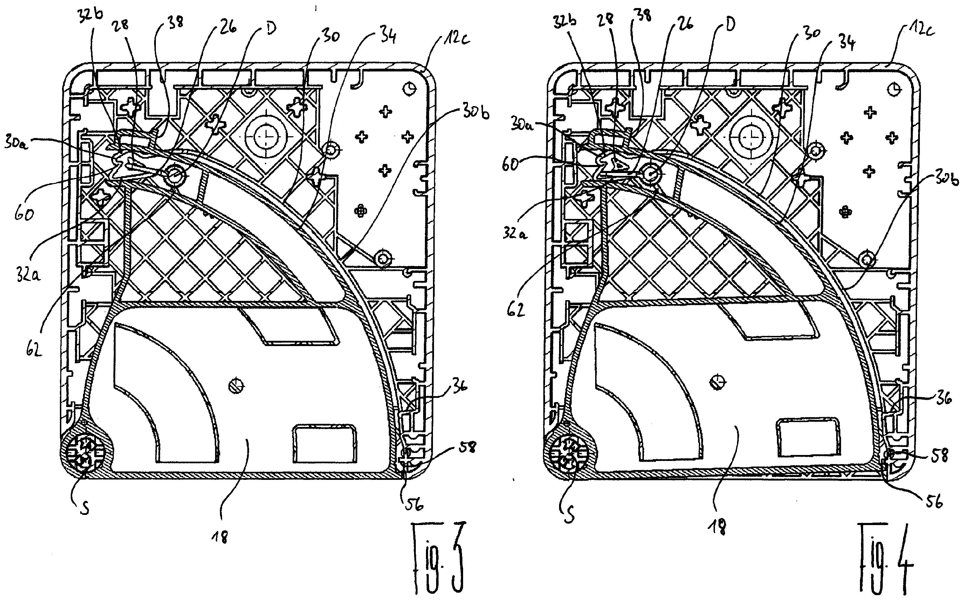

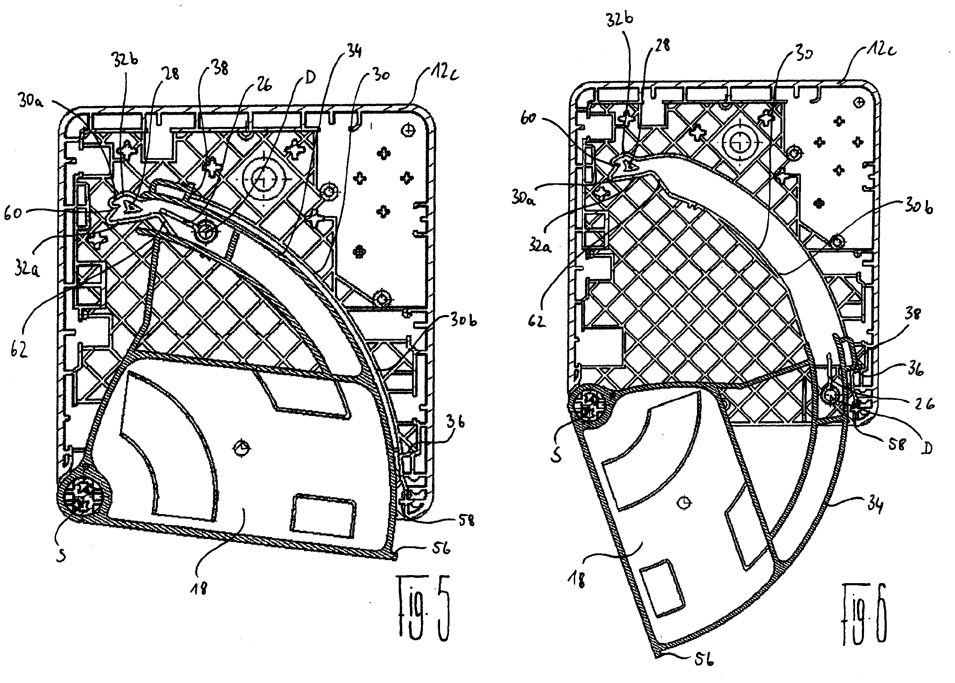

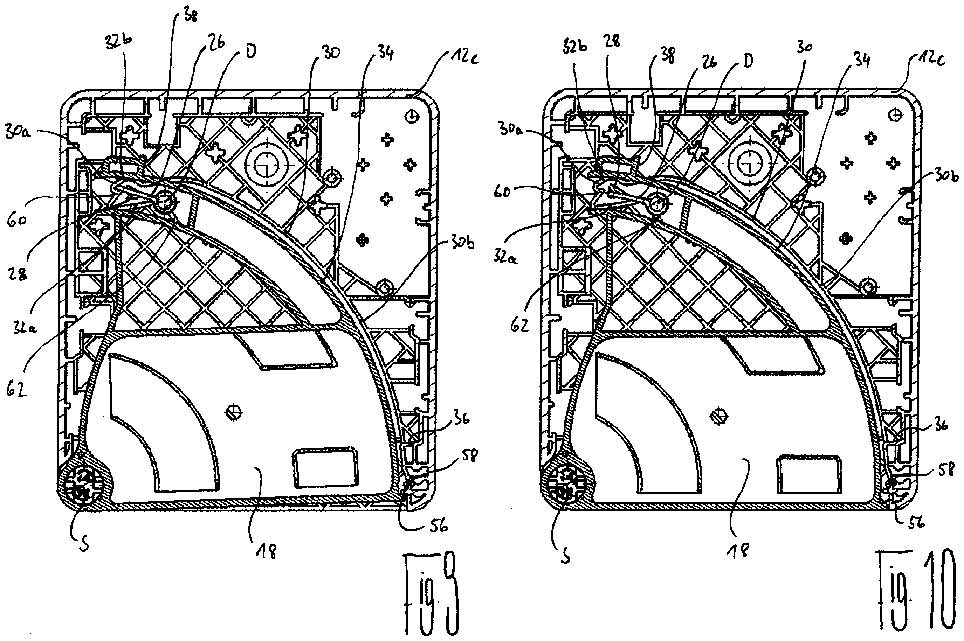

An dem Gehäusezwischenabschnitt 12c ist ein Lagerfortsatz 14 ausgebildet, welcher im zusammengebauten Zustand der Vorrichtung in eine Fortsatzaufnahme 16 einer Signalgeberaufnahme 18 aufgenommen ist. Der Lagerfortsatz 14 definiert eine Schwenkachse S der zwischen einer Geschlossen-Stellung (Fig. 3 und 10) und einer Offen-Stellung (Fig. 6) verschwenkbaren Signalgeberaufnahme 18, welche zur Aufnahme des Signalgebers 10 dient.

Für eine federkraftunterstützte Aufschwenkbewegung der Signalgeberaufnahme 18 ist ein Federelement 20 vorgesehen, dessen Federkraft ein Aufschwenken der Signalgeberaufnahme 18 aus der Geschlossen-Stellung in die Offen-Stellung bewirkt. In dem dargestellten Ausführungsbeispiel ist das Federelement 20 eine Schenkelfeder mit mehreren um eine Windungsachse W gewundenen Windungen, wobei die Windungsachse W und die Schwenkachse S der Signalgeberaufnahme 18 zumindest annähernd koaxial ausgerichtet sind, d.h. die Windungsachse W und die Schwenkachse S fallen zusammen. Des Weiteren stützt sich ein Schenkel der Schenkelfeder an der Signalgeberaufnahme 18 und der andere Schenkel an einem der Gehäusezwischenabschnitte 12c ab.

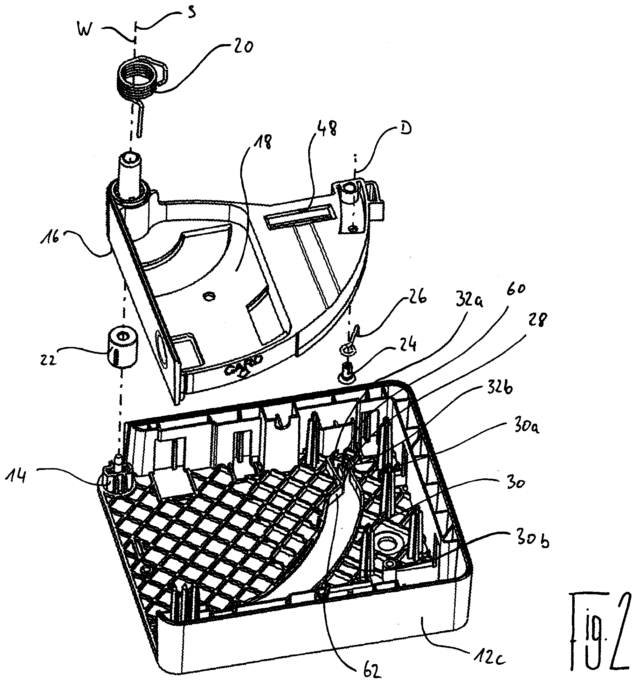

Aufgrund der Federkraft des Federelements 20 erfährt die Signalgeberaufnahme 18 bei einem Aufschwenkvorgang eine Beschleunigung. Damit der Aufschwenkvorgang jedoch sanft und gleichmäßig abläuft, ist ein Bremsmittel 22 (Fig. 2) vorgesehen, welches zwischen den Lagerfortsatz 14 und die Fortsatzaufnahme 16 der Signalgeberaufnahme 18 geschaltet ist. Durch das Bremsmittel 22 wird eine Reibung zwischen dem Lagerfortsatz 14 und der Fortsatzaufnahme 16 erhöht, was zum Abbremsen einer Schwenkbewegung (Aufschwenken oder Einschwenken) der Signalgeberaufnahme 18 führt. Es versteht sich, dass eine durch die Reibung erzeugte Bremskraft des Bremsmittels 22 geringer ist als die Federkraft des Federelements 20.

Um ein ungewolltes Aufschwenken der Signalgeberaufnahme 18 aus ihrer Geschlossen-Stellung zu verhindern, ist ein an der Signalgeberaufnahme 18 mittels eines Clipselements 24 drehbar gelagerter Sperrhaken 26 vorgesehen (Fig. 2), welcher in der Geschlossen-Stellung der Signalgeberaufnahme 18 mit einem in den Fig. 4 bis 8 besonders deutlich erkennbaren Gegenlager 28 in Eingriff steht. Der Eingriff zwischen Sperrhaken 26 und Gegenlager 28 lässt sich durch Verschwenken der Signalgeberaufnahme 18 entgegen ihrer Aufschwenkrichtung lösen, wie nachstehend noch genauer erläutert wird.

Das Clipselement 24 definiert eine Drehachse D des Sperrhakens 26, um welche der Sperrhaken 26 drehbar ist. Wie anhand von Fig. 2 zu erkennen ist, sind die Drehachse D des Sperrhakens 26 und die Schwenkachse S der Signalgeberaufnahme 18 zumindest annähernd parallel zueinander ausgerichtet.

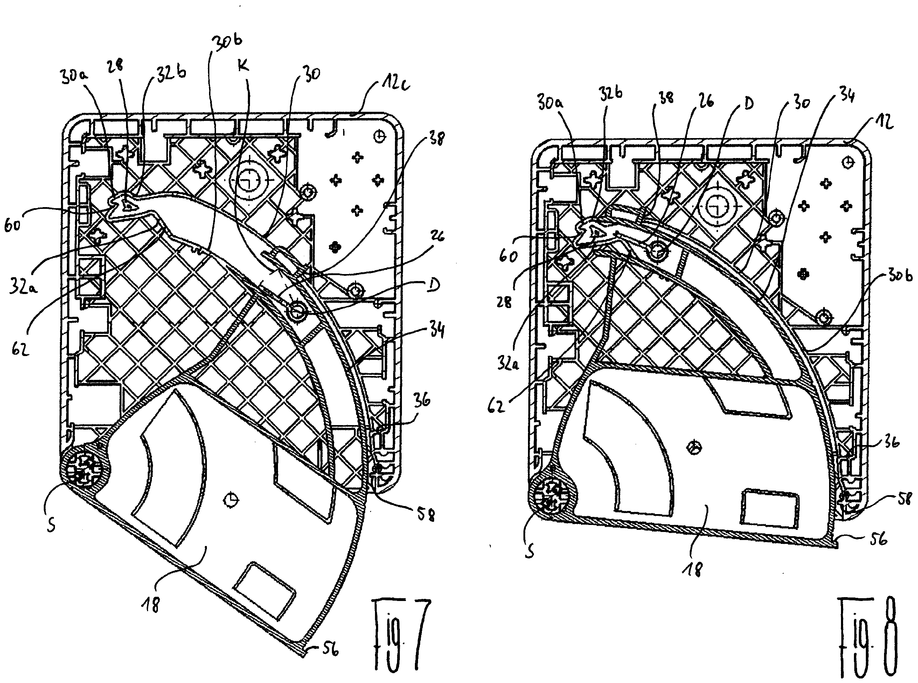

An dem Zwischengehäuseabschnitt 12c ist ferner eine Führungskulisse 30 ausgebildet, welche einen ersten Kulissenabschnitt 30a zur Führung des Sperrhakens 26 und einen zweiten Kulissenabschnitt 30b zur Führung der Signalgeberaufnahme 18 umfasst. Der erste Kulissenabschnitt 30a umfasst bezüglich der Schwenkachse S der Signalgeberaufnahme 18 eine radial innenliegende Führungsbahn 32a und eine radial außenliegende Führungsbahn 32b, welche besonders deutlich anhand von Fig. 6 und 7 erkennbar sind. Wie ebenfalls insbesondere anhand von Fig. 6 und 7 ersichtlich ist, befindet sich das Gegenlager 28 inselartig radial zwischen der radial innenliegenden Führungsbahn 32a und der radial außenliegenden Führungsbahn 32b. Insbesondere ist das Gegenlager 28 an dem Zwischengehäuseabschnitt 12c stationär angebracht.

Der zweite Kulissenabschnitt 30b der Führungskulisse 30 dient zusammen mit einem an der Signalgeberaufnahme 18 ausgebildeten Führungsbogen 34 (Fig. 3 bis 10) zur sicheren Führung der Signalgeberaufnahme 18 während eines Verschwenkvorgangs der Signalgeberaufnahme 18.

Außerdem ist an dem Zwischengehäuseabschnitt 12c ein Anschlag 36 ausgebildet, welcher zusammen mit einem an dem Führungsbogen 34 ausgebildeten Fortsatz 38 eine Aufschwenkbewegung der Signalgeberaufnahme 18 begrenzt und somit gewissermaßen eine Offen-Stellung der Signalgeberaufnahme 18 definiert (Fig. 6).

Nochmals auf Fig. 1 zurückkommend umfasst die Vorrichtung außerdem ein Betätigungsmittel 40 zur Betätigung des in der Signalgeberaufnahme 18 aufgenommenen Signalgebers 10. In dem dargestellten Ausführungsbeispiel umfasst das Betätigungsmittel 40 zwei Nocken 42, welche in Richtung einer Längsmittelachse L einer Welle 44 gesehen axial beabstandet sind und welche um 180° versetzt von der Welle 44 radial abstehen. Mittels des Betätigungsmittels 40 lässt sich der in der Signalgeberaufnahme 18 aufgenommene Signalgeber 10 auf der Grundlage von Signalen eines nicht dargestellten virtuellen Schlüssels, zum Beispiel eines Mobiltelefons, betätigen, um hierdurch ein nicht gezeigtes Türschloss des Kraftfahrzeugs entweder zu entriegeln oder zu verriegeln.

Zu diesem Zweck ist jedem Nocken 42 jeweils ein in den Figuren nicht dargestelltes Übertragungsmittel in Form eines zweiseitigen Hebels zugeordnet, so dass durch Auslenkung eines der Hebel an dem Signalgeber 10 entweder ein Entriegelungstaster zum Aussenden eines Entriegelungssignals zum Entriegeln des Türschlosses oder ein Verriegelungstaster zum Aussenden eines Verriegelungssignals zum Verriegeln des Türschlosses betätigt wird.

An der Welle 44 ist ferner ein Verriegelungsmittel 46 ausgebildet, welches zum Verriegeln der Signalgeberaufnahme 18 in eine an der Signalgeberaufnahme 18 dafür vorgesehene Aussparung 48 eintaucht. In einer Entriegelungsstellung, in welcher das Verriegelungsmittel 46 nicht mehr in die Aussparung 48 der Signalgeberaufnahme 18 eintaucht, kann die Signalgeberaufnahme 18 aus der Geschlossen-Stellung in die Offen-Stellung verschwenkt werden.

Zur gemeinsamen Bewegung, insbesondere Drehbewegung, von Betätigungsmittel 40 und Verriegelungsmittel 46 ist ein in Fig. 1 von einem Schneckengetriebe 50 teilweise verdeckter Antrieb 52, hier in Form eines Elektromotors, vorgesehen, dessen Drehbewegung mittels des Schneckengetriebes 50 über ein an der Welle 44 ausgebildetes Zahnrad 54 auf die Welle 44 übertragen wird.

Nachfolgend wird anhand der Fig. 3 bis 10 ein Verschwenkvorgang der Signalgeberaufnahme 18 aus der Geschlossen-Stellung in die Offen-Stellung (Fig. 3 bis 6) sowie aus der Offen-Stellung in die Geschlossen-Stellung (Fig. 6 bis 10) erläutert. Das Verriegelungsmittel 46 befindet sich hierbei in seiner Entriegelungsstellung.

In Fig. 3 befindet sich die Signalgeberaufnahme 18 in ihrer Geschlossen-Stellung, wobei wie bereits erwähnt der mit dem Gegenlager 28 in Eingriff befindliche Sperrhaken 26 ein Aufschwenken in die Offen-Stellung verhindert. Um den Eingriff zwischen dem Sperrhaken 26 und dem Gegenlager 28 zu lösen, muss die Signalgeberaufnahme 18 zunächst entgegen einer Aufschwenkrichtung verschwenkt werden. Hierzu wird die Signalgeberaufnahme 18 geringfügig in das Gehäuse der Vorrichtung hineingedrückt, wobei ein an dem Führungsbogen 34 ausgebildeter Vorsprung 56 zusammen mit einem an dem Zwischengehäuseabschnitt 12c ausgebildeten Gegenvorsprung 58 ein übermäßiges Hineindrücken der Signalgeberaufnahme verhindert. Gleichzeitig gelangt der Sperrhaken 26 mit einem an dem ersten Kulissenabschnitt 30a der Führungskulisse 30 ausgebildeten Vorsprung 60 in Kontakt, wodurch der Sperrhaken 26 in Richtung der radial innenliegenden Führungsbahn 32a verdreht wird (Fig. 4), so dass der Sperrhaken 26 entlang der radial innen liegende Führungsbahn 32a entlang laufen kann und an dem Gegenlager 28 vorbeigleiten bzw. sich vorbeibewegen kann (Fig. 5). Die Signalgeberaufnahme 18 kann nun frei in die in Fig. 6 gezeigte Offen-Stellung aufdrehen und ein Benutzer kann den in der Signalgeberaufnahme 18 aufgenommenen Signalgeber zum Entriegeln einer Wegfahrsperre und/oder Starten eines Motors des Kraftfahrzeugs entnehmen.

Zum Schließen der Signalgeberaufnahme 18, entweder mit aufgenommenem Signalgeber 10 oder ohne Signalgeber 10, wird die Signalgeberaufnahme 18 aus der Offen-Stellung in Fig. 6 durch Hineindrücken der Signalgeberaufnahme 18 in das Gehäuse entgegen der Federkraft des Federelements 20 eingeschwenkt. Dabei kann sich der Sperrhaken 26 relativ zu dem Führungsbogen 34 frei bewegen, d.h. er ist in dem zur Führung des Führungsbogens 34 dienenden zweiten Kulissenabschnitt 30b der Führungskulisse 30 ungeführt, was in Fig. 7 durch den Kreissektor K schematisch dargestellt ist.

Ist die Signalgeberaufnahme 18 derart weit eingeschwenkt, dass der Sperrhaken 26 in den Bereich des ersten Kulissenabschnitts 30a der Führungskulisse 30 gelangt, ergeben sich je nach Auslenkung des Sperrhakens 26 unterschiedliche Möglichkeiten, wie der Sperrhaken 26 mit dem Gegenlager 28 wieder in Eingriff gelangen kann.

Läuft der Sperrhaken 26 entlang der radial innenliegenden Führungsbahn 32a, so bewirkt eine an der radial innenliegenden Führungsbahn 32a ausgebildete Rampe 62, dass der Sperrhaken 26 in Richtung der radial außenliegenden Führungsbahn 32b ausgelenkt wird (Fig. 8), so dass der Sperrhaken 26 bei einer weiteren Einschwenkbewegung der Signalgeberaufnahme 18 entlang der radial außenliegenden Führungsbahn 32b an dem Gegenlager 28 vorbeigeführt wird. Indem die Signalgeberaufnahme 18 derart weit in das Gehäuse der Vorrichtung hineingedrückt wird, dass der an dem Führungsbogen 34 ausgebildete Vorsprung 56 mit dem an dem Gehäusezwischenabschnitt 12c ausgebildeten Gegenvorsprung 58 zur Anlage gelangt, wird der Sperrhaken 26 mittels des an dem ersten Kulissenabschnitt 30a der Führungskulisse 30 ausgebildete Vorsprung 60 für einen erneuten Eingriff zwischen Sperrhaken 26 und Gegenlager 28 ausgerichtet. Beendet der Benutzer den Einschwenkvorgang, indem er die Signalgeberaufnahme 18 loslässt, bewirkt die Federkraft des Federelements 20 eine Verschwenkung der Signalgeberaufnahme 18 in Richtung der Offen-Stellung, wobei der Sperrhaken 26 und das Gegenlager 28 wieder in Eingriff gelangen und ein weiteres Aufschwenken der Signalgeberauflage 18 verhindert wird.

Läuft dahingegen der Sperrhaken 26 bereits entlang der radial außenliegenden Führungsbahn 32b (in den Figuren nicht gezeigt), so entfällt ein Ausrichten des Sperrhakens 26, da der Sperrhaken 26 für den Eingriff zwischen Sperrhaken 26 und Gegenlager 28 ohnehin korrekt ausgerichtet ist.

Ist der Sperrhaken 26 in etwa mittig ausgerichtet (in den Figuren nicht gezeigt), d.h. er läuft weder auf der radial innenliegenden Führungsbahn 32a noch auf der radial außenliegenden Führungsbahn 32b auf, so trifft der Sperrhaken 26 auf eine an dem Gegenlager 28 ausgebildete Schrägfläche, welche den Sperrhaken 26 in Richtung der radial außenliegenden Führungsbahn 32b verdreht, so dass der Sperrhaken 26 für einen erneuten Eingriff mit dem Gegenlager 28 optimal ausgerichtet ist.

### Bezugszeichenliste

- 10: Signalgeber
- 12a: Gehäusebasis
- 12b: Gehäusedeckel
- 12c: Gehäusezwischenabschnitt
- 14: Lagerfortsatz
- 16: Fortsatzaufnahme
- 18: Signalgeberaufnahme
- 20: Federelement
- 22: Bremsmittel
- 24: Clipselement
- 26: Sperrhaken
- 28: Gegenlager
- 30: Führungskulisse
- 30a: Kulissenabschnitt
- 30b: Kulissenabschnitt
- 32a: Führungsbahn
- 32b: Führungsbahn
- 34: Führungsbogen
- 36: Anschlag
- 38: Fortsatz
- 40: Betätigungsmittel
- 42: Nocke
- 44: Welle
- 46: Verriegelungsmittel
- 48: Aussparung
- 50: Schneckengetriebe
- 52: Antrieb
- 54: Zahnrad
- 56: Vorsprung
- 58: Gegenvorsprung
- 60: Vorsprung
- 62: Rampe

- D: Drehachse
- K: Kreissektor
- L: Längsmittelachse
- S: Schwenkachse
- W: Windungsachse

## Patentansprüche

1. Vorrichtung zum Betätigen eines Funkschlüssels (10) eines Kraftfahrzeugs, mit einer zwischen einer Geschlossen-Stellung und einer Offen-Stellung um eine Schwenkachse (S) verschwenkbaren Signalgeberaufnahme (18) zur Aufnahme des Funkschlüssels (10), einem Betätigungsmittel (40) zur Betätigung des in der Signalgeberaufnahme (18) aufgenommenen Funkschlüssels (10), einem Gehäuse, in welches die Signalgeberaufnahme (18) bei einer Verschwenkung aus der Offen-Stellung in die Geschlossen-Stellung einschwenkbar ist, und einem Federelement (20), dessen Federkraft ein Aufschwenken der Signalgeberaufnahme (18) aus der Geschlossen-Stellung in die Offen-Stellung bewirkt.

2. Vorrichtung nach Anspruch 1,
**dadurch gekennzeichnet, dass**
das Federelement (20) eine Schenkelfeder mit mindestens einer um eine Windungsachse (W) gewundenen Windung ist, wobei die Windungsachse (W) und die Schwenkachse (S) zumindest annähernd koaxial ausgerichtet sind.

3. Vorrichtung nach Anspruch 1 oder 2,
**dadurch gekennzeichnet, dass**
die Signalgeberaufnahme (18) mittels eines die Schwenkachse (S) definierenden Lagerfortsatzes (14) verschwenkbar gelagert ist, welcher in einer Fortsatzaufnahme (16) der Signalgeberaufnahme (18) aufgenommen ist.

4. Vorrichtung nach zumindest einem der vorstehenden Ansprüche,
**gekennzeichnet durch**
ein Bremsmittel (22) zum Abbremsen einer Schwenkbewegung der Signalgeberaufnahme (18).

5. Vorrichtung nach Anspruch 3 und 4,
**dadurch gekennzeichnet, dass**
das Bremsmittel (22) zwischen dem Lagerfortsatz (14) und der Fortsatzaufnahme (16) angeordnet ist.

6. Vorrichtung nach zumindest einem der vorstehenden Ansprüche,
**gekennzeichnet durch**
einen Sperrhaken (26), welcher in der Geschlossen-Stellung der Signalgeberaufnahme (18) zusammen mit einem Gegenlager (28) ein Aufschwenken der Signalgeberaufnahme (18) verhindert.

7. Vorrichtung nach Anspruch 6,
**dadurch gekennzeichnet, dass**
der Sperrhaken (26) und das Gegenlager (28) in der Geschlossen-Stellung der Signalgeberaufnahme (18) form- und/oder kraft- und/oder reibschlüssig in Eingriff stehen und der Eingriff zwischen Sperrhaken (26) und Gegenlager (28) durch Verschwenken der Signalgeberaufnahme (18) entgegen einer Aufschwenkrichtung lösbar ist.

8. Vorrichtung nach Anspruch 6 oder 7,
**dadurch gekennzeichnet, dass**
der Sperrhaken (26) an der Signalgeberaufnahme (18) um eine Drehachse (D) drehbar gelagert ist, insbesondere wobei die Drehachse (D) des Sperrhakens (26) zumindest annähernd parallel zu der Schwenkachse (S) der Signalgeberaufnahme (18) ausgerichtet ist.

9. Vorrichtung nach Anspruch 8,
**gekennzeichnet durch**
eine Führungskulisse (30) mit einem ersten Kulissenabschnitt (30a) zur Führung des Sperrhakens (26), wobei der erste Kulissenabschnitt (30a) bezüglich der Schwenkachse (S) der Signalgeberaufnahme (18) eine radial innenliegende Führungsbahn (32a) und eine radial außenliegende Führungsbahn (32b) umfasst.

10. Vorrichtung nach Anspruch 9,
**dadurch gekennzeichnet, dass**
das Gegenlager (28) radial zwischen der radial innenliegenden Führungsbahn (32a) und der radial außenliegenden Führungsbahn (32b) angeordnet ist.

11. Vorrichtung nach Anspruch 8 und 9,
**dadurch gekennzeichnet, dass**
an dem ersten Kulissenabschnitt (30a) der Führungskulisse (30) ein Vorsprung (60) ausgebildet ist, welcher bei einer Verschwenkung der Signalgeberaufnahme (18) von der Geschlossen-Stellung in eine den Eingriff freigebende Stellung den Sperrhaken (26) derart verdreht, dass der Sperrhaken (26) bei einer anschließenden Aufschwenkbewegung der Signalgeberaufnahme (18) an dem Gegenlager (28) vorbeibewegbar ist.

12. Vorrichtung nach Anspruch 11
**dadurch gekennzeichnet, dass**
der Sperrhaken (26) bei der Aufschwenkbewegung entlang der radial innenliegenden Führungsbahn (32a) aufläuft.

13. Vorrichtung nach Anspruch 8 und 9,
**dadurch gekennzeichnet, dass**
der erste Kulissenabschnitt (30a) der Führungskulisse (30) eine Rampe (62) aufweist, welche bei einer Einschwenkbewegung der Signalgeberaufnahme (18) aus der Offen-Stellung in die Geschlossen-Stellung den Sperrhaken (26) für einen erneuten Eingriff mit dem Gegenlager (28) ausrichtet, insbesondere wobei die Rampe (62) den Sperrhaken (26) in Richtung der radial außenliegenden Führungsbahn (32b) verdreht und der Sperrhaken (26) bei einer Einschwenkbewegung der Signalgeberaufnahme (18) entlang der radial außenliegenden Führungsbahn (32b) aufläuft.

14. Vorrichtung nach zumindest einem der Ansprüche 9 bis 13,
**dadurch gekennzeichnet, dass**
die Führungskulisse (30) einen zweiten Kulissenabschnitt (30b) aufweist, welcher bei einer Verschwenkung der Signalgeberaufnahme (18) zusammen mit einem an der Signalgeberaufnahme (18) ausgebildeten Führungsbogen (34) zur Führung der Signalgeberaufnahme (18) dient, insbesondere wobei der Sperrhaken (26) in dem zweiten Kulissenabschnitt (30b) der Führungskulisse (30) ungeführt ist.

15. Vorrichtung nach Anspruch 14,
**dadurch gekennzeichnet, dass**
an dem Führungsbogen (34) ein Fortsatz (38) ausgebildet ist, welcher zusammen mit einem, insbesondere an einem Gehäuse der Vorrichtung ausgebildeten, Anschlag (36) eine Aufschwenkbewegung der Signalgeberaufnahme (18) begrenzt.

## Claims

1. An apparatus for actuating a radio key (10) of a motor vehicle, comprising a signal generator receiver (18) for receiving the radio key (10) that is pivotable about a pivot axis (S) between a closed position and an open position; an actuation means (40) for actuating the radio key (10) received in the signal generator receiver (18); a housing into which the signal generator receiver (18) can be pivoted on a pivoting from the open position into the closed position; and a spring element (20) whose spring force brings about a pivoting open of the signal generator receiver (18) from the closed position into the open position.

2. An apparatus in accordance with claim 1,
**characterized in that**
the spring element (20) is a leg spring comprising at least one winding wound about a winding axis (W), with the winding axis (W) and the pivot axis (S) being at least approximately coaxially aligned.

3. An apparatus in accordance with claim 1 or claim 2,
**characterized in that**
the signal generator receiver (18) is pivotably supported by means of a bearing prolongation (14) which defines the pivot axis (S) and which is received in a prolongation receiver (16) of the signal generator receiver (18).

4. An apparatus in accordance with at least one of the preceding claims,
**characterized by**
a braking means (22) for decelerating a pivot movement of the signal generator receiver (18).

5. An apparatus in accordance with claim 3 and claim 4,
**characterized in that**
the braking means (22) is arranged between the bearing prolongation (14) and the prolongation receiver (16).

6. An apparatus in accordance with at least one of the preceding claims,
**characterized by**
a locking hook (26) which, in the closed position of the signal generator receiver (18), prevents a pivoting open of the signal generator receiver (18) together with a counter bearing (28).

7. An apparatus in accordance with claim 6,
**characterized in that**
the locking hook (26) and the counter bearing (28) are in form-fitting and/or force-fitting and/or friction-locked engagement in the closed position of the signal generator receiver (18) and the engagement between the locking hook (26) and the counter bearing (28) can be released by pivoting the signal generator receiver (18) against a pivot-open direction.

8. An apparatus in accordance with claim 6 or claim 7,
**characterized in that**
the locking hook (26) is rotatably supported about an axis of rotation (D) at the signal generator receiver (18), in particular with the axis of rotation (D) of the locking hook (26) being aligned at least approximately in parallel with the pivot axis (S) of the signal generator receiver (18).

9. An apparatus in accordance with claim 8,
**characterized by**
a guide slot (30) having a first slot section (30a) for guiding the locking hook (26), with the first slot section (30a) comprising a radially inwardly disposed guide track (32a) and a radially outwardly disposed guide track (32b) with respect to the pivot axis (S) of the signal generator receiver (18).

10. An apparatus in accordance with claim 9,
**characterized in that**
the counter bearing (28) is radially arranged between the radially inwardly disposed guide track (32a) and the radially outwardly disposed guide track (32b).

11. An apparatus in accordance with claim 8 and claim 9,
**characterized in that**
a projection (60) is formed at the first slot section (30a) of the guide slot (30) and, on a pivoting of the signal generator receiver (18) from the closed position into a position releasing the engagement, rotates the locking hook (26) such that the locking hook (26) can be moved past the counter bearing (28) on a subsequent pivot-open movement of the signal generator receiver (18).

12. An apparatus in accordance with claim 11,
**characterized in that**
the locking hook (26) runs up along the radially inwardly disposed guide track (32a) on the pivot-open movement.

13. An apparatus in accordance with claim 8 and claim 9,
**characterized in that**
the first slot section (30a) of the guide slot (30) has a ramp (62) which, on a pivot-in movement of the signal generator receiver (18) from the open position into the closed position, aligns the locking hook (26) for a repeat engagement with the counter bearing (28), in particular with the ramp (62) rotating the locking hook (26) in the direction of the radially outwardly disposed guide track (32b) and the locking hook (26) running up along the radially outwardly disposed guide track (32b) on a pivot-in movement of the signal generator receiver (18).

14. An apparatus in accordance with at least one of the claims 9 to 13,
**characterized in that**
the guide slot (30) has a second slot section (30b) which, on a pivoting of the signal generator receiver (18), serves to guide the signal generator receiver (18) together with a guide arc (34) formed at the signal generator receiver (18),
in particular with the locking hook (26) being unguided in the second slot section (30b) of the guide slot (30).

15. An apparatus in accordance with claim 14,
**characterized in that**
a prolongation (38) is formed at the guide arc (34) and bounds a pivot-open movement of the signal generator receiver (18) together with an abutment (36) which is in particular formed at a housing of the apparatus.

## Revendications

1. Dispositif pour actionner une clé à radiocommande (10) d'un véhicule automobile, comportant un logement d'émetteur de signaux (18) qui peut pivoter autour d'un axe de pivotement (S) entre une position fermée et une position ouverte et qui est destiné à loger la clé à radiocommande (10), un moyen d'actionnement (40) pour actionner la clé à radiocommande (10) logée dans le logement d'émetteur de signaux (18), un boîtier vers l'intérieur duquel peut pivoter le logement d'émetteur de signaux (18) lors d'un pivotement de la position ouverte à la position fermée, et un élément de ressort (20) dont la force élastique provoque un pivotement du logement d'émetteur de signaux (18) de la position fermée à la position ouverte.

2. Dispositif selon la revendication 1,
**caractérisé en ce que**
l'élément de ressort (20) est un ressort à branches ayant au moins une spire enroulée autour d'un axe d'enroulement (W), l'axe d'enroulement (W) et l'axe de pivotement (S) étant orientés au moins approximativement coaxialement.

3. Dispositif selon la revendication 1 ou 2,
**caractérisé en ce que**
le logement d'émetteur de signaux (18) est monté de manière à pouvoir pivoter au moyen d'un prolongement de palier (14) qui définit l'axe de pivotement (S) et qui est logé dans un logement de prolongement (16) du logement d'émetteur de signaux (18).

4. Dispositif selon l'une au moins des revendications précédentes,
**caractérisé par**
un moyen de freinage (22) pour freiner un mouvement de pivotement du logement d'émetteur de signaux (18).

5. Dispositif selon la revendication 3 et 4,
**caractérisé en ce que**
le moyen de freinage (22) est disposé entre le prolongement de palier (14) et le logement de prolongement (16).

6. Dispositif selon l'une au moins des revendications précédentes,
**caractérisé par**
un crochet de blocage (26) qui, dans la position fermée du logement d'émetteur de signaux (18), empêche, conjointement avec un contre-palier (28), le logement d'émetteur de signaux (18) de pivoter vers la position ouverte.

7. Dispositif selon la revendication 6,
**caractérisé en ce que**
le crochet de blocage (26) et le contre-palier (28) s'engagent par coopération de forme et/ou de force et/ou de friction, dans la position fermée du logement d'émetteur de signaux (18), et l'engagement entre le crochet de blocage (26) et le contre-palier (28) peut être libéré par pivotement du logement d'émetteur de signaux (18) en sens opposé à une direction de pivotement vers la position ouverte.

8. Dispositif selon la revendication 6 ou 7,
**caractérisé en ce que**
le crochet de blocage (26) est monté sur le logement d'émetteur de signaux (18) de manière à pouvoir tourner autour d'un axe de rotation (D), en particulier l'axe de rotation (D) du crochet de blocage (26) étant orienté au moins approximativement parallèlement à l'axe de pivotement (S) du logement d'émetteur de signaux (18).

9. Dispositif selon la revendication 8,
**caractérisé par**
une glissière de guidage (30) ayant une première portion de glissière (30a) pour guider le crochet de blocage (26), la première portion de glissière (30a) comprenant une voie de guidage radialement intérieure (32a) et une voie de guidage radialement extérieure (32b) par rapport à l'axe de pivotement (S) du logement d'émetteur de signaux (18).

10. Dispositif selon la revendication 9,
**caractérisé en ce que**
le contre-palier (28) est disposé radialement entre la voie de guidage radialement intérieure (32a) et la voie de guidage radialement extérieure (32b).

11. Dispositif selon la revendication 8 et 9,
**caractérisé en ce que**
une saillie (60) est formée sur la première portion de glissière (30a) de la glissière de guidage (30) et fait tourner le crochet de blocage (26), lors d'un pivotement du logement d'émetteur de signaux (18) de la position fermée à une position libérant l'engagement, de telle sorte que le crochet de blocage (26) peut être déplacé pour passer devant le contre-palier (28) lors d'un mouvement de pivotement suivant du logement d'émetteur de signaux (18) vers la position ouverte.

12. Dispositif selon la revendication 11
**caractérisé en ce que**
le crochet de blocage (26) remonte le long de la voie de guidage radialement intérieure (32a) lors du mouvement de pivotement vers la position ouverte.

13. Dispositif selon la revendication 8 et 9,
**caractérisé en ce que**
la première portion de glissière (30a) de la glissière de guidage (30) présente une rampe (62) qui, lors d'un mouvement de pivotement du logement d'émetteur de signaux (18) de la position ouverte à la position fermée, aligne le crochet de blocage (26) en vue d'un réengagement avec le contre-palier (28), en particulier la rampe (62) faisant tourner le crochet de blocage (26) en direction de la voie de guidage radialement extérieure (32b), et le crochet de blocage (26) remontant le long de la voie de guidage radialement extérieure (32b) lors d'un mouvement de pivotement du logement d'émetteur de signaux (18) vers l'intérieur.

14. Dispositif selon l'une au moins des revendications 9 à 13,
**caractérisé en ce que**
la glissière de guidage (30) présente une seconde portion de glissière (30b) qui, lors d'un pivotement du logement d'émetteur de signaux (18), sert à guider le logement d'émetteur de signaux (18) conjointement avec un coude de guidage (34) formé sur le logement d'émetteur de signaux (18), en particulier le crochet de blocage (26) étant non guidé dans la seconde portion de glissière (30b) de la glissière de guidage (30).

15. Dispositif selon la revendication 14,
**caractérisé en ce que**
un prolongement (38) est formé sur le coude de guidage (34) qui, conjointement avec une butée (36) formée en particulier sur un boîtier du dispositif, limite un mouvement de pivotement du logement d'émetteur de signaux (18) vers la position ouverte.
